(19) Europäisches Patentamt
European Patent Office
Office européen des brevets

(11) **EP 4 092 579 A1**

(12) **EUROPEAN PATENT APPLICATION**

(43) Date of publication:
**23.11.2022 Bulletin 2022/47**

(21) Application number: **22161995.0**

(22) Date of filing: **14.03.2022**

(51) International Patent Classification (IPC):
**G06N 3/04** *(2006.01)*        **G06N 3/08** *(2006.01)*

(52) Cooperative Patent Classification (CPC):
**G06N 3/082; G06N 3/0454; G06V 40/11**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2021 JP 2021086149**

(71) Applicant: **FUJITSU LIMITED**
**Kawasaki-shi, Kanagawa 211-8588 (JP)**

(72) Inventors:
• **GAO, Hong**
  **Kawasaki-shi, 211-8588 (JP)**
• **SAKAI, Yasufumi**
  **Kawasaki-shi, 211-8588 (JP)**

(74) Representative: **Haseltine Lake Kempner LLP**
**Cheapside House**
**138 Cheapside**
**London EC2V 6BJ (GB)**

(54) **MACHINE LEARNING PROGRAM, MACHINE LEARNING METHOD, AND INFORMATION PROCESSING DEVICE**

(57)    A machine learning program that causes at least one computer to execute a process, the process includes acquiring a calculation amount of each partial network of a plurality of partial networks that is included in a neural network; determining a target channel based on the calculation amount of the each partial network and a scaling coefficient of each channel in a batch normalization layer included in the each partial network; and deleting the target channel.

FIG. 7

```
        START
          │
          ▼              S1
EXECUTE TRAINING WITH γ VALUE
          │
          ▼              S2
CLASSIFY COMPONENTS BY FUNCTION
          │
          ▼              S3
CALCULATE CALCULATION AMOUNT OF EACH
FUNCTION AND RATIO OF CALCULATION AMOUNT
          │
          ▼              S4
CALCULATE γ′ VALUE OF EACH CHANNEL
          │
          ▼              S5
SET PRUNING RATE
          │
          ▼              S6
SORT γ′ VALUES AND DETERMINE NUMBER OF
CHANNELS TO BE DELETED
          │
          ▼              S7
EXECUTE PRUNING TO DELETE CHANNELS WITH
SMALL γ′ VALUE
          │
          ▼              S8
EVALUATE ACCURACY (LOSS) AND SPEED
          │
          ▼              S9
EXECUTE TRAINING USING PRUNED NEURAL
NETWORK
          │
          ▼
         END
```

EP 4 092 579 A1

**Description**

FIELD

The embodiments discussed herein are related to a machine learning program, a machine learning method, and an information processing device.

BACKGROUND

Pruning techniques are known as techniques for speeding up processing of an information processing device using a neural network. The pruning techniques can reduce a calculation amount during inference and speed up the processing while maintaining inference accuracy by deleting nodes, channels, layers, and the like that have small impact on the inference accuracy using a neural network.

International Publication Pamphlet No. WO 2020/149178, Japanese National Publication of International Patent Application No. 2019-522850, and U.S. Patent Application Publication No. 2019/0340493 are disclosed as related art.

SUMMARY

[TECHNICAL PROBLEM]

However, with the above-described techniques, the effect of pruning may not be sufficiently obtained depending on a configuration of the neural network or the like. For example, in a case of applying the technique to a complex neural network having a plurality of components, the accuracy is significantly reduced and the effect of speeding up is small due to the pruning.

In one aspect, an object is to provide a machine learning program, a machine learning method, and an information processing device capable of suppressing a decrease in inference accuracy and speeding up processing.

[SOLUTION TO PROBLEM]

According to an aspect of the embodiments, a machine learning program that causes at least one computer to execute a process, the process includes acquiring a calculation amount of each partial network of a plurality of partial networks that is included in a neural network; determining a target channel based on the calculation amount of the each partial network and a scaling coefficient of each channel in a batch normalization layer included in the each partial network; and deleting the target channel.

[ADVANTAGEOUS EFFECTS OF INVENTION]

According to one embodiment, it is possible to suppress a decrease in inference accuracy and speed up processing.

BRIEF DESCRIPTION OF DRAWINGS

FIG. 1 is a diagram for describing processing in an information processing device according to an embodiment;
FIG. 2 is a diagram for describing a function of a batch normalization (BN) layer;
FIG. 3 is a diagram for describing L1 regularization training;
FIG. 4 is a graph illustrating an increase rate of loss in a case of increasing a pruning rate in a reference technique;
FIG. 5 is a table illustrating an increase rate of loss in a case of increasing a pruning rate in a reference technique;
FIG. 6 is a functional block diagram illustrating a functional configuration of the information processing device according to the embodiment;
FIG. 7 is a flowchart illustrating a processing procedure of the information processing device according to the embodiment;
FIG. 8 is a graph illustrating calculation ratios of respective functions;
FIG. 9 is a graph illustrating an increase rate of loss in a case of increasing a pruning rate in the information processing device according to the embodiment;
FIG. 10 is a table illustrating comparison results between an existing technique and the embodiment; and
FIG. 11 is a diagram for describing a hardware configuration example.

DESCRIPTION OF EMBODIMENTS

Hereinafter, embodiments of a machine learning program, a machine learning method, and an information processing device disclosed in the present application will be described with reference to the drawings. Note that the embodiments are not limited to the present disclosure.

[Embodiment]

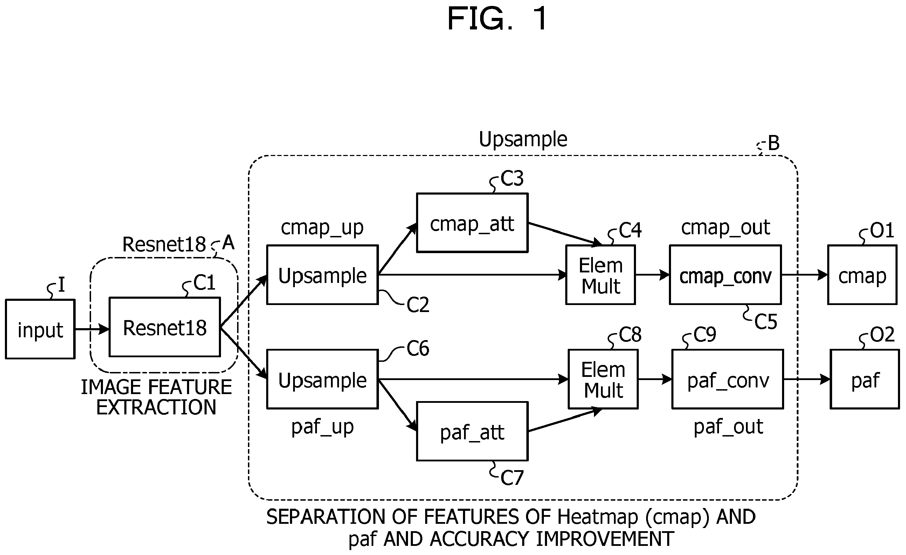

FIG. 1 is a diagram for describing processing in an information processing device according to an embodiment. The processing illustrated in FIG. 1 is processing using a neural network executed in the information processing device and can be applied to trt-pose (a network that recognizes human joints and/or allows real-time body pose estimation, for example using pre-trained models for human pose estimation) by a low-cost information processing device such as Jetson nano. The information processing device executes various types of processing illustrated in components C1 to C9 for input data (input) I and outputs output data (cmap and paf) O1 and O2.

Here, a reference technique for pruning the above-described neural network will be described (a neural network potentially used for human pose estimation). In the reference technique, a channel to be pruned is determined using a scaling coefficient $\gamma$ applied to an output of a batch normalization (BN) layer of a component. Note that, in a case where the component does not have a BN layer, the BN layer may be inserted into the component and the pruning may be performed, and a value output by the BN layer may be deleted as a reference value.

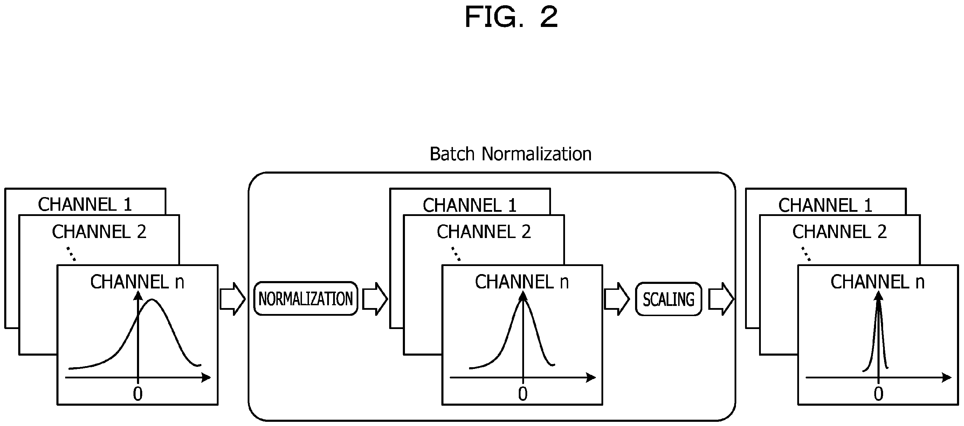

FIG. 2 is a diagram for describing a function of the BN layer. As illustrated in FIG. 2, in a case where there are channels 1 to n, normalization processing of calculating a mean value $\mu_B$ and a variance $\sigma^2_B$ for obtaining an output z' in which an input $z_{in}$ of each channel is normalized to a distribution of mean 0 and variance 1 is executed, using the following equation (1). Note that the subscript B corresponds to the channel currently being calculated.

[Math. 1]

$$z' = \frac{z_{in} - \mu_B}{\sqrt{\sigma_B^2 + \epsilon}} \qquad \cdots (1)$$

Moreover, scaling processing of calculating an output $z_{out}$ of each channel is executed by applying a scaling coefficient $\gamma$ to the output z' that is the normalized distribution, adding a bias $\beta$, and performing shifting, using the following equation (2).

[Math. 2]

$$z_{out} = \gamma z' + \beta \qquad \cdots (2)$$

Here, training by L1 regularization (Lasso regression) is applied to the scaling coefficient $\gamma$, and iterative training is executed. In the L1 regularization, a loss function L is calculated by the following equation (3). In the equation (3), the first term is an original loss function and the second term is an L1 regularization term. In the L1 regularization, g(r) = $|\gamma|$ is used.

[Math. 3]

$$L = \sum_{(x,y)} l(f(x,W),y) + \lambda \sum_{\gamma \in \Gamma} g(\gamma) \qquad \cdots (3)$$

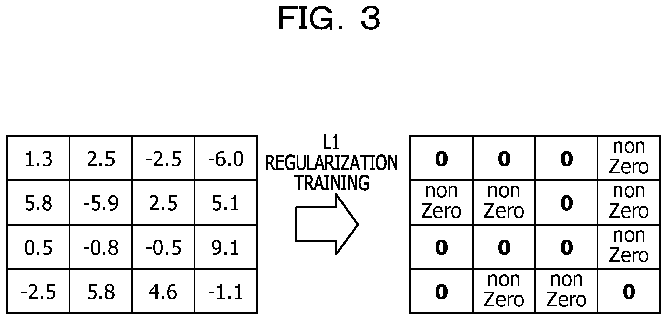

FIG. 3 is a diagram for describing L1 regularization training. When the training by L1 regularization is repeatedly executed, the scaling function $\gamma$ of each channel is calculated for each training as numerically illustrated on the left side of FIG. 3. Then, when a pruning rate of the entire neural network is set and the number of channels to be pruned is determined, channels are deleted by the number corresponding to the setting from a channel with a smallest absolute value of the scaling function $\gamma$. In FIG. 3, eight channels are deleted by pruning from the channel with the smallest $|\gamma|$ (values are zero), and the other channels are left as non zero.

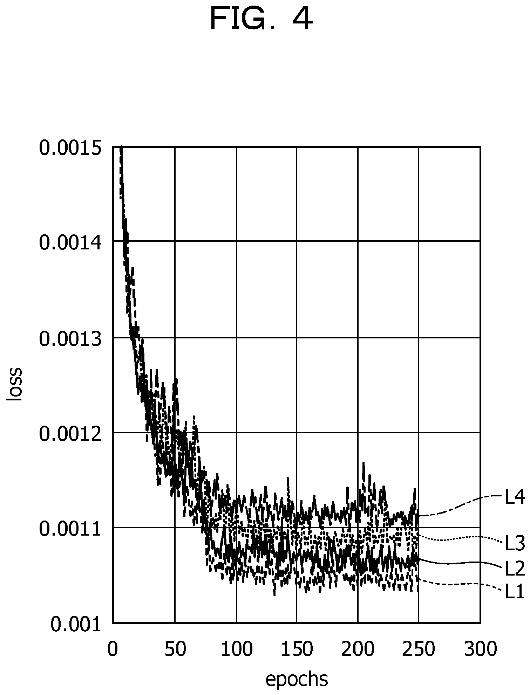

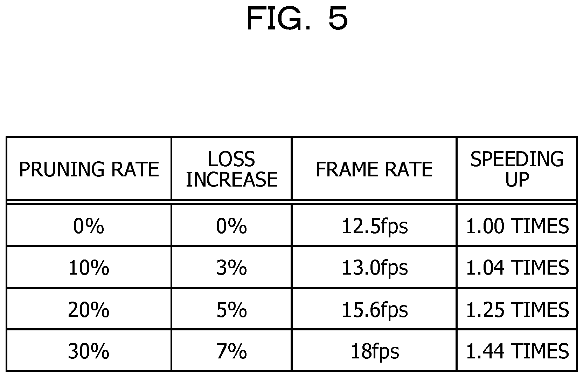

FIGs. 4 and 5 are a graph and a table illustrating an increase rate of loss in a case of increasing the pruning rate in a reference technique. In FIG. 4, lines L1 to L4 illustrate relationships between the number of epochs and the loss when the pruning rates are 0%, 10%, 20%, and 30%, respectively. FIG. 5 illustrates the pruning rate, the increase rate of loss, a frame rate, and a speedup ratio. Note that FIGs. 4 and 5 are examples of applying a pruned machine learning model to an inference part of trt-pose by jetson nano. As illustrated in FIG. 5, in the reference technique, when the pruning rate is set to 10%, the processing is speeded up by 4% but the loss increases by 3%. Note that the frame rate indicates the number of images that can be processed per second, and the speedup ratio is an increase ratio of the frame rate with respect to the frame rate with the pruning rate of 0%. When the pruning rate is further increased, further speedup can be expected but the loss also increases. As described above, in the reference technique, the loss increases by pruning and the effect of speeding up the processing is also small.

Therefore, in the present embodiment (which may be used with the same neural network), an information processing device capable of improving a calculation speed without sacrificing the accuracy by, in pruning a neural network, dividing the neural network into components by a difference in function, and determining channels for reduction on the basis of a value of a scaling coefficient and a calculation amount of each component will be described.

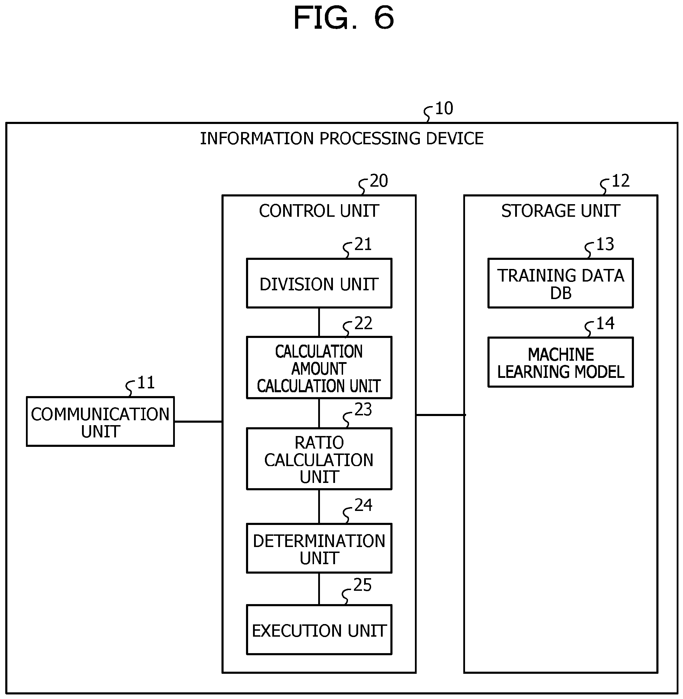

FIG. 6 is a functional block diagram illustrating a functional configuration of the information processing device according to the embodiment. As illustrated in FIG. 6, the information processing device 10 includes a communication unit 11, a storage unit 12, and a control unit 20. Note that the information processing device 10 is not limited to the illustrated device, and may also have a display unit and the like.

The communication unit 11 executes communication with another device. For example, the communication unit 11 receives input data I. Furthermore, the communication unit 11 may also receive the input data I via an Internet line. The communication unit 11 may also cause the storage unit 12 to store the input data I as a training data database (DB) 13.

The storage unit 12 is a storage device that stores various types of data, programs executed by the control unit 20, and the like, and is implemented by, for example, a memory, a hard disk, or the like. For example, the storage unit 12 stores the training data DB 13, a machine learning model 14, and the like.

The training data DB 13 is a database that stores a plurality of training data used for training a machine learning model. For example, the training data DB 13 stores a moving image obtained by capturing person's movement, and is used by the information processing device 10 for recognizing movement of person's joints captured in the moving image for various purposes.

The machine learning model 14 is a model generated by training. For example, as the machine learning model 14, a model of a deep neural network (DNN), a convolution neural network (CNN), or the like can be adopted.

The control unit 20 is a processing unit that controls the entire information processing device 10 and is implemented by a processor or the like. For example, the control unit 20 has a division unit 21, a calculation amount calculation unit 22, a ratio calculation unit 23, a determination unit 24, and an execution unit 25.

The division unit 21 divides the neural network into partial networks. The neural network is configured by, for example, a plurality of components C1 to C9 illustrated in FIG. 1. Then, the division unit 21 classifies the components C1 to C9, which are the partial networks constituting the neural network, for each function, for example. Note that the division unit 21 may also divide the functions for each specific processing unit such as a layer as the partial networks constituting the neural network, and the partial networks that the division unit 21 classifies for each function are not particularly limited. The division unit 21 classifies the component C1 having a function to extract features of an image into a function A, and classifies the components C2 to C9 having functions to separate features of Heatmap (cmap: color map) representing joint point-likeness and paf (part association field) representing a connection relationship between joint points and improve the accuracy into a function B.

The calculation amount calculation unit 22 calculates the calculation amount of each component divided by the division unit 21. For example, the calculation amount calculation unit 22 calculates the calculation amount of the component determined according to the function for each function. The calculation amount calculation unit 22 calculates a calculation amount $C_A$ of the function A by the following equation (4) and calculates a calculation amount $C_B$ of the function B by the following equation (5).

[Math. 4]

$$C_A = \sum_{i=0}^{k1} C_{conv\_i} \qquad \cdots (4)$$

[Math. 5]

$$C_B = \sum_{i=0}^{k2} C_{conv\_i} \qquad \cdots (5)$$

$C_{conv\_i}$ in the equations (4) and (5) represents the calculation amount of a convolution layer and can be calculated by the following equation (6). Note that k1 is the number of convolution layers in the function A, and k2 is the number of convolution layers in the function B.

[Math. 6]

$$C_{conv\_i} = (kernel\_size)^2 \times input\_channel \times output\_channel \times (input\_size/stride)^2 \qquad \cdots (6)$$

The ratio calculation unit 23 calculates a ratio of the calculation amount obtained by dividing the calculated calculation amount for each function by a sum of the calculation amounts each calculated for each function. The ratio calculation unit 23 calculates the ratio $C_A/C_{total}$ of the calculation amount of the function A and the ratio $C_B/C_{total}$ of the calculation amount of the function B. Note that $C_{total}$ is the following equation (7).

[Math. 7]

$$C_{total} = C_A + C_B \qquad \cdots (7)$$

The determination unit 24 determines a channel to be deleted on the basis of the calculated calculation amount for each function and the scaling coefficient of each channel in the BN layer included in the component. For example, the determination unit 24 determines a channel having a small sum of the ratio of the calculation amount and the scaling coefficient of each channel in the BN layer included in the component as the channel to be deleted. The determination unit 24 calculates an index $\gamma'_m$ by the equation (8) using a scaling coefficient $\gamma_m$ of a channel m in the function A, and calculates an index $\gamma'_n$ by the equation (9) using a scaling coefficient $\gamma_n$ of a channel n in the function B.

[Math. 8]

$$\gamma'_m = \gamma_m + \alpha(C_A/C_{total}) \qquad \cdots (8)$$

[Math. 9]

$$\gamma'_n = \gamma_n + \alpha(C_B/C_{total}) \qquad \cdots (9)$$

Moreover, the determination unit 24 determines the number of channels to be deleted according to the pruning rate. Note that, in a case where the component does not have a BN layer, the BN layer may be inserted into the component.

The execution unit 25 executes pruning based on the target channel. The pruning may also be processing of deleting the target channel or may also be processing of setting a weight of the target channel to be small or to zero. Furthermore, the execution unit 25 applies training by L1 regularization to the scaling coefficient. As a result, it is possible to execute the pruning as illustrated in FIG. 3 and speed up the processing while maintaining the inference accuracy. Furthermore, the execution unit 25 executes training using the neural network on which pruning has been executed, and generates a machine learning model 14.

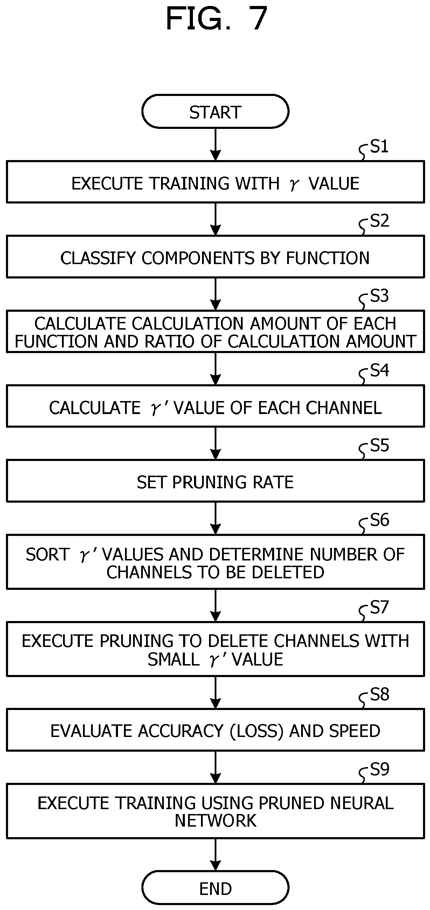

FIG. 7 is a flowchart illustrating a processing procedure of the information processing device according to the embodiment. As illustrated in FIG. 7, when the processing is started, the information processing device 10 first repeatedly executes training with the scaling coefficient $\gamma$ ($\gamma_m$, $\gamma_n$) (step S1). Then, the scaling coefficients $\gamma_m$ and $\gamma_n$ are stored in the storage unit 12 of the information processing device 10 each time the training is repeatedly executed.

Next, the division unit 21 classifies the components by function (step S2). The division unit 21 classifies the component C1 having the function to extract features of an image into the function A, and classifies the components C2 to C9 having the functions to separate features of Heatmap (cmap) representing joint point-likeness and paf representing a connection relationship between joint points and improve the accuracy into the function B.

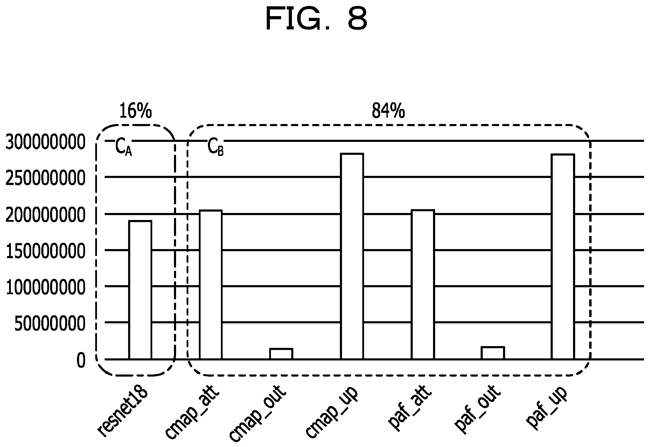

Thereafter, the calculation amount calculation unit 22 calculates the calculation amount of the component for each function, and the ratio calculation unit 23 calculates the ratio of the calculation amount for each function (step S3). FIG. 8 is a graph illustrating the calculation ratios of the respective functions. As illustrated in FIG. 8, as an example, the ratio of the calculation amount $C_A$ of the function A can be calculated to be 16% of the total, and the ratio of the calculation amount $C_B$ of the function B can be calculated to be 84% of the total.

Moreover, the determination unit 24 calculates the index $\gamma'$ ($\gamma'_m$, $\gamma'_n$) of each channel (step S4). Note that $\alpha = 0.12$ is set here, but the value of $\alpha$ is not particularly limited.

Next, the determination unit 24 sets the pruning rate (step S5). For example, the determination unit 24 sets the pruning rate to each of the predetermined values (0%, 10%, 20%, and 30%).

Moreover, the determination unit 24 sorts the indexes $\gamma'$ ($\gamma'_m$, $\gamma'_n$) of the respective channels (arranges the indexes in descending order of absolute values) and determines the number of channels of target j to be deleted according to the pruning rate (step S6). For example, in a case where the number of channels is N and the pruning rate is 10%, the determination unit 24 determines N × 10/100 channels as the channels to be deleted.

Then, the execution unit 25 executes pruning to delete the target channels of the determined number from the channel with the smallest absolute value among the indexes $\gamma'$ ($\gamma'_m$, $\gamma'_n$) of the respective sorted channels (step S7).

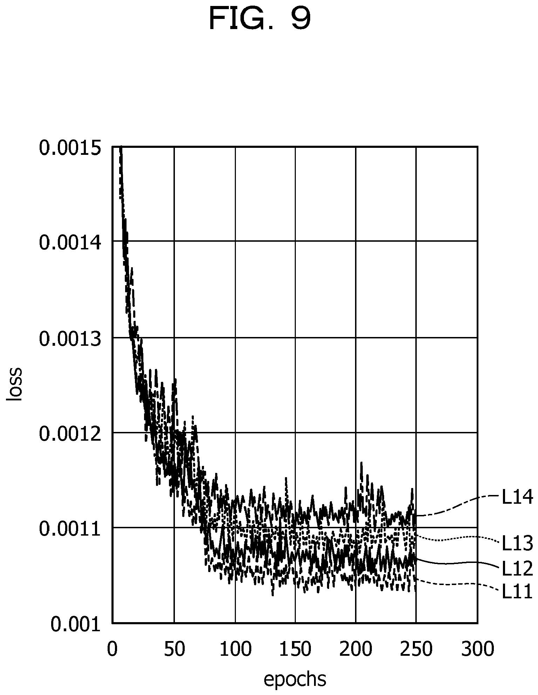

Thereafter, the execution unit 25 evaluates the accuracy (loss) and the speed (speedup ratio) (step S8). FIG. 9 is a graph illustrating the increase rate of loss in a case of increasing the pruning rate in the information processing device according to the embodiment. In FIG. 9, lines L11 to L14 illustrate relationships between the number of epochs and the loss when the pruning rates are 0%, 10%, 20%, and 30%, respectively.

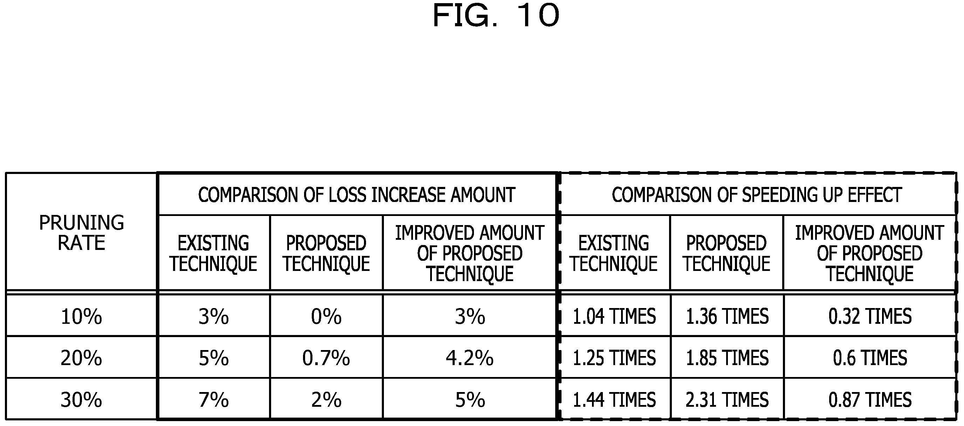

FIG. 10 is a table illustrating comparison results between an existing technique and the embodiment. FIGs. 9 and 10 are examples of applying a pruned machine learning model to the inference part of trt-pose by jetson nano, similar to FIGs. 4 and 5. As illustrated in FIG. 10, in the case where the pruning rate is 10%, the loss increases by 3% in the reference technique, whereas the loss does not increase (0%) according to the embodiment, so an improvement of 3% is seen. Moreover, in the case where the pruning rate is 10%, the processing is speeded up by 1.04 times in the reference technique, whereas the processing is speeded up by 1.36 times according to the embodiment, so an improvement of 0.32 times is seen. Similarly, in the case where the pruning rate is 30%, the loss is improved by 5% and the processing is speeded up by 0.87 times.

Then, the execution unit 25 evaluates the accuracy (loss) and the speed (speedup ratio), selects an appropriate pruning rate, and executes training using the pruned neural network, thereby to generate the machine learning model 14 having high-speed processing with high accuracy (step S9). For example, the execution unit 25 selects the appropriate pruning rate, deletes the channels, executes training with the channels deleted, and generates the machine learning model 14, thereby suppressing deterioration of the inference accuracy by the generated machine learning model 14 and speeding up the processing. For example, by applying this machine learning model 14 to trt-pose using Jetson nano, it is possible to recognize the movement of person's joints accurately at high speed.

As described above, according to the embodiment, by determining the channels to be pruned using the index $\gamma'$ obtained by adding the value related to the calculation amount to the scaling coefficient $\gamma$, the loss can be reduced and the processing can be speeded up as compared with the reference technique.

The data examples, numerical examples, component types and numbers, function types and numbers, specific examples, and the like used in the above embodiment are merely examples and can be arbitrarily changed. For example, the division unit 21 may also classify the components into two or more functions.

Pieces of information including a processing procedure, a control procedure, a specific name, various sorts of data, and parameters described above or illustrated in the drawings may be optionally changed unless otherwise noted.

Furthermore, each component of each device illustrated in the drawings is functionally conceptual and does not necessarily have to be physically configured as illustrated in the drawings. For example, specific forms of distribution and integration of each device are not limited to those illustrated in the drawings. For example, the whole or a part of the device may be configured by being functionally or physically distributed or integrated in optional units according to various loads, usage situations, or the like.

Moreover, all or any part of individual processing functions performed in each device may be implemented by a central processing unit (CPU) and a program analyzed and executed by the corresponding CPU, or may be implemented as hardware by wired logic.

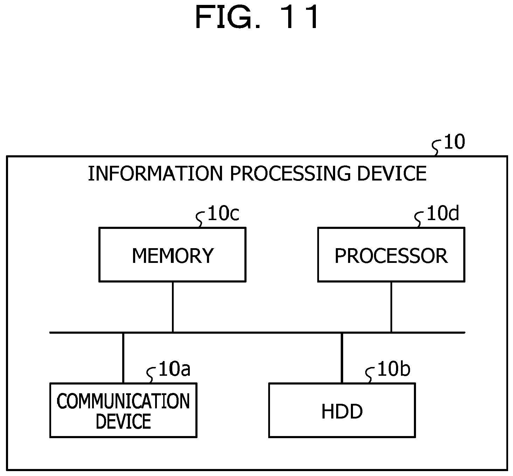

FIG. 11 is a diagram illustrating a hardware configuration example. As illustrated in FIG. 11, the information processing device 10 includes a communication device 10a, a hard disk drive (HDD) 10b, a memory 10c, and a processor 10d. Furthermore, each of the units illustrated in FIG. 11 is mutually connected by a bus or the like.

The communication device 10a is a network interface card or the like and communicates with another device. The HDD 10b stores a program that activates the functions illustrated in FIG. 6, and a DB.

The processor 10d reads a program that executes processing similar to the processing of each processing unit illustrated in FIG. 6 from the HDD 10b or the like, and develops the read program in the memory 10c, thereby activating a process that performs each function described with reference to FIG. 6 or the like. For example, this process executes a function similar to the function of each processing unit included in the information processing device 10. For example, the processor 10d reads a program having similar functions to the division unit 21, the calculation amount calculation unit 22, the ratio calculation unit 23, the determination unit 24, the execution unit 25, and the like from the HDD 10b or the like. Then, the processor 10d executes a process of executing processing similar to the division unit 21, the calculation amount calculation unit 22, the ratio calculation unit 23, the determination unit 24, the execution unit 25, and the like.

As described above, the information processing device 10 operates as an information processing device that executes a machine learning method by reading and executing a program. Furthermore, the information processing device 10 may also implement functions similar to the functions of the above-described embodiments by reading the program described above from a recording medium by a medium reading device and executing the read program described above. Note that the program referred to in other embodiments is not limited to being executed by the information processing device 10. For example, the embodiments may be similarly applied to a case where another computer or server executes the program, or a case where these cooperatively execute the program.

This program may be distributed via a network such as the Internet. Furthermore, this program may be recorded in a computer-readable recording medium such as a hard disk, flexible disk (FD), compact disc read only memory (CD-ROM), magneto-optical disk (MO), or digital versatile disc (DVD), and may be executed by being read from the recording medium by a computer.

**Claims**

1. A machine learning program that causes at least one computer to execute a process, the process comprising:

   acquiring a calculation amount of each partial network of a plurality of partial networks that is included in a neural network;
   determining a target channel based on the calculation amount of the each partial network and a scaling coefficient of each channel in a batch normalization layer included in the each partial network; and
   deleting the target channel.

2. The machine learning program according to claim 1, wherein
   the plurality of partial networks are classified by function.

3. The machine learning program according to clam 1 or 2, wherein the process further comprising
   training by using the neural network in which the target channel is deleted.

4. The machine learning program according to any one of claims 1 to 3, wherein

   the acquiring includes calculating a ratio of the calculation amount to a sum of calculation amount of the plurality of partial networks, and
   the determining includes determining a channel that has a smallest sum of the ratio and the scaling coefficient as the target channel.

5. The machine learning program according to any one of claims 1 to 4, wherein the process further comprising
   when a partial network of the plurality of partial networks does not include a batch normalization layer, inserting a batch normalization layer to the partial network.

6. The machine learning program according to any one of claims 1 to 5, wherein
   the determining includes applying training by L1 regularization to the scaling coefficient.

7. The machine learning program according to any one of claims 1 to 6, wherein
   the determining includes determining a number of a plurality of target channels according to a certain rate.

8. A method for a computer to execute a process comprising:

   acquiring a calculation amount of each partial network of a plurality of partial networks that is included in a neural network;
   determining a target channel based on the calculation amount of the each partial network and a scaling coefficient of each channel in a batch normalization layer included in the each partial network; and
   deleting the target channel.

9. An information processing device comprising:

a division unit divides a neural network into a plurality of partial networks;
a calculation unit that acquires a calculation amount of each partial network of the plurality of partial networks;
a determination unit that determines a target channel based on the calculation amount of the each partial network and a scaling coefficient of each channel in a batch normalization layer included in the each partial network; and
an execution unit that deletes the target channel.

10. A method including carrying out inference in a neural network trained according to any one of claims 1 to 7, to estimate a real-time pose of a human body.

FIG. 1

FIG. 2

# FIG. 3

| 1.3 | 2.5 | -2.5 | -6.0 |
|---|---|---|---|
| 5.8 | -5.9 | 2.5 | 5.1 |
| 0.5 | -0.8 | -0.5 | 9.1 |
| -2.5 | 5.8 | 4.6 | -1.1 |

L1 REGULARIZATION TRAINING ⇒

| **0** | **0** | **0** | non Zero |
|---|---|---|---|
| non Zero | non Zero | **0** | non Zero |
| **0** | **0** | **0** | non Zero |
| **0** | non Zero | non Zero | **0** |

# FIG. 4

# FIG. 5

| PRUNING RATE | LOSS INCREASE | FRAME RATE | SPEEDING UP |
|---|---|---|---|
| 0% | 0% | 12.5fps | 1.00 TIMES |
| 10% | 3% | 13.0fps | 1.04 TIMES |
| 20% | 5% | 15.6fps | 1.25 TIMES |
| 30% | 7% | 18fps | 1.44 TIMES |

# FIG. 6

INFORMATION PROCESSING DEVICE 10

CONTROL UNIT 20

DIVISION UNIT 21

CALCULATION AMOUNT CALCULATION UNIT 22

RATIO CALCULATION UNIT 23

DETERMINATION UNIT 24

EXECUTION UNIT 25

COMMUNICATION UNIT 11

STORAGE UNIT 12

TRAINING DATA DB 13

MACHINE LEARNING MODEL 14

# FIG. 7

START

↓ S1

EXECUTE TRAINING WITH $\gamma$ VALUE

↓ S2

CLASSIFY COMPONENTS BY FUNCTION

↓ S3

CALCULATE CALCULATION AMOUNT OF EACH
FUNCTION AND RATIO OF CALCULATION AMOUNT

↓ S4

CALCULATE $\gamma'$ VALUE OF EACH CHANNEL

↓ S5

SET PRUNING RATE

↓ S6

SORT $\gamma'$ VALUES AND DETERMINE NUMBER OF
CHANNELS TO BE DELETED

↓ S7

EXECUTE PRUNING TO DELETE CHANNELS WITH
SMALL $\gamma'$ VALUE

↓ S8

EVALUATE ACCURACY (LOSS) AND SPEED

↓ S9

EXECUTE TRAINING USING PRUNED NEURAL
NETWORK

↓

END

# FIG. 8

# FIG. 9

# FIG. 10

| PRUNING RATE | COMPARISON OF LOSS INCREASE AMOUNT | | | COMPARISON OF SPEEDING UP EFFECT | | |
|---|---|---|---|---|---|---|
| | EXISTING TECHNIQUE | PROPOSED TECHNIQUE | IMPROVED AMOUNT OF PROPOSED TECHNIQUE | EXISTING TECHNIQUE | PROPOSED TECHNIQUE | IMPROVED AMOUNT OF PROPOSED TECHNIQUE |
| 10% | 3% | 0% | 3% | 1.04 TIMES | 1.36 TIMES | 0.32 TIMES |
| 20% | 5% | 0.7% | 4.2% | 1.25 TIMES | 1.85 TIMES | 0.6 TIMES |
| 30% | 7% | 2% | 5% | 1.44 TIMES | 2.31 TIMES | 0.87 TIMES |

EP 4 092 579 A1

# FIG. 11

INFORMATION PROCESSING DEVICE ⸜10

MEMORY ⸜10c

PROCESSOR ⸜10d

COMMUNICATION DEVICE ⸜10a

HDD ⸜10b

Europäisches
Patentamt

European
Patent Office

Office européen
des brevets

# EUROPEAN SEARCH REPORT

Application Number

EP 22 16 1995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/033380 A1 (INTEL CORP [US]; YAN SHOUMENG [CN]; LI JIANGUO [CN]; LIU ZHUANG [CN]) 21 February 2019 (2019-02-21)<br>* abstract *<br>* paragraph [0001] – paragraph [0002] *<br>* paragraph [0160] – paragraph [0184] *<br>* paragraph [0215] – paragraph [0234] *<br>* paragraph [0243] – paragraph [0260] *<br>* claims 1–19; figures 1–23B * | 1–10 | INV.<br>G06N3/04<br>G06N3/08 |
| X | US 2019/251441 A1 (LU XIN [US] ET AL) 15 August 2019 (2019-08-15)<br>* abstract *<br>* paragraph [0001] – paragraph [0007] *<br>* paragraph [0016] – paragraph [0022] *<br>* paragraph [0024] – paragraph [0025] *<br>* paragraph [0028] – paragraph [0049] *<br>* paragraph [0051] – paragraph [0062] *<br>* claims 1–20; figures 1–7 * | 1–10 | |
| | –/-- | | |

|  |
|---|
| TECHNICAL FIELDS SEARCHED (IPC) |
| G06N |

The present search report has been drawn up for all claims

| Place of search | Date of completion of the search | Examiner |
|---|---|---|
| Munich | 10 October 2022 | Eftimescu, Nicolae |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 22 16 1995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOONHO BOO ET AL: "Structured Sparse Ternary Weight Coding of Deep Neural Networks for Efficient Hardware Implementations", ARXIV.ORG, CORNELL UNIVERSITY LIBRARY, 201 OLIN LIBRARY CORNELL UNIVERSITY ITHACA, NY 14853, 1 July 2017 (2017-07-01), XP080776167, DOI: 10.1109/SIPS.2017.8110021 * abstract * * I. Introduction; page 1 – page 2 * * II. STRUCTURED SPARSE TERNARY QUANTIZATION; page 2 – page 3 * * III. TRAINING OF STRUCTURED SPARSE TERNARY NETWORKS; page 3 – page 4 * * V. CONCLUDING REMARKS; page 6 * ----- | 1-10 | |
| | | | **TECHNICAL FIELDS SEARCHED** (IPC) |

The present search report has been drawn up for all claims

| Place of search | Date of completion of the search | Examiner |
|---|---|---|
| Munich | 10 October 2022 | Eftimescu, Nicolae |

EPO FORM 1503 03.82 (P04C01)

## ANNEX TO THE EUROPEAN SEARCH REPORT
## ON EUROPEAN PATENT APPLICATION NO.

EP 22 16 1995

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2022

| Patent document cited in search report | Publication date | Patent family member(s) | Publication date |
|---|---|---|---|
| WO 2019033380 A1 | 21-02-2019 | US 2020234130 A1<br>WO 2019033380 A1 | 23-07-2020<br>21-02-2019 |
| US 2019251441 A1 | 15-08-2019 | NONE | |

For more details about this annex : see Official Journal of the European Patent Office, No. 12/82

**EP 4 092 579 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020149178 A
- JP 2019522850 A
- US 20190340493